# EUROPÄISCHE PATENTSCHRIFT

(11) **EP 3 507 641 B1**
(45) Veröffentlichungstag und Bekanntmachung des Hinweises auf die Patenterteilung: **03.07.2024**
(21) Anmeldenummer: 17761076.3
(22) Anmeldetag: 01.09.2017
(51) Int. Cl.: G02B 21/00, G02B 21/36, G02B 27/00

(54) **MIKROSKOP ZUR BETRACHTUNG EINZELN BELEUCHTETER SCHIEFER EBENEN MIT EINEM MIKROLINSEN-ARRAY**
MICROSCOPE FOR OBSERVING INDIVIDUAL ILLUMINATED INCLINED PLANES WITH A MICROLENS ARRAY
MICROSCOPE POUR EXAMINER DIFFÉRENTS PLANS INCLINÉS ÉCLAIRÉS AVEC UN RÉSEAU DE MICROLENTILLES

(30) Priorität: 01.09.2016 DE 102016116403; 01.02.2017 DE 102017102001
(43) Veröffentlichungstag der Anmeldung: 10.07.2019
(73) Patentinhaber: Leica Microsystems CMS GmbH, 35578 Wetzlar (DE)
(72) Erfinder: FAHRBACH, Florian, 69115 Heidelberg (DE)
(74) Vertreter: Grünecker Patent- und Rechtsanwälte PartG mbB
(86) Internationale Anmeldenummer: PCT/EP2017/071941
(87) Internationale Veröffentlichungsnummer: WO 2018/041988

(56) Entgegenhaltungen:
- EP-A1- 2 587 295
- WO-A1-2010/012980
- DE-A1-102008 031 412
- DE-A1-102014 102 215
- US-A1- 2012 062 997
- US-A1- 2014 209 821

## Beschreibung

Die Erfindung betrifft eine optische Anordnung zur Detektion von Streu- und/oder Fluoreszenzlicht in einem Schiefeebenenmikroskop, umfassend ein Objektivsystem mit einer optischen Achse zum Auffangen und Transmittieren des Streu- und/oder Fluoreszenzlichtes von einer Objektivseite zu einer Tubusseite und ein auf der Tubusseite des Objektivsystems befindliches Tubussystem, umfassend mindestens eine Tubuslinse, mit einer optischen Achse zum Fokussieren des vom Objektivsystem aufgefangenen Streu- und/oder Fluoreszenzlichtes in einer Tubus-Detektorebene, wobei eine Vielzahl optischer Linsen zwischen dem Tubussystem und der Tubus-Detektorebene angeordnet ist, wobei die Vielzahl von Linsen im Wesentlichen simultan das Streu- und/oder Fluoreszenzlicht transmittieren und in eine von der virtuellen Tubus-Detektorebene beabstandete Detektorebene fokussieren und wobei jede Linse aus der Vielzahl der Linsen eine geringere numerische Apertur aufweist als das Tubussystem. Ferner betrifft die Erfindung ein Schiefeebenenmikroskop, umfassend eine optische Beleuchtungsanordnung zur Beleuchtung einer Probe, die sich in einem durch die optische Beleuchtungsanordnung definierten Detektionsvolumen befindet, und eine optische Anordnung zur Detektion von Streu- und/oder Fluoreszenzlicht aus dem Detektionsvolumen.

Kombiniert man die Lichtfeld-Mikroskopie mit der Lichtblattbeleuchtung, dann benötigt man typsicherweise neben dem Detektionsobjektiv mindestens ein zweites Objektiv zur Beleuchtung der Probe. Diese schränkt den Anwendungsbereich und die verwendbaren Proben ein.

In der Lichtblattmikroskopie besteht ebenfalls das Problem, dass ein zweites Objektiv zur Beleuchtung verwendet werden muss, welches den Bereich der Fokusebene des Detektionsobjektivs beleuchtet.

Im Stand der Technik wird insbesondere bei Schiefeebenenmikroskopen (auch *oblique plane microscopes* genannt) ein einzelnes Objektiv mit großer numerischer Apertur dazu genutzt, die Probe mit einem gegenüber einer Fokusebene des Objektivs verkippten Lichtstreifen oder zweidimensionalem Lichtblatt zu beleuchten, dadurch eine verkippte Beleuchtungsebene auszubilden und möglichst senkrecht zu dieser Beleuchtung mit demselben Objektiv das Streu- und/oder Fluoreszenzlicht wieder einzusammeln. Da die Beleuchtungsebene nicht senkrecht zur optischen Achse des Objektivs steht, kann diese nicht direkt auf einen zweidimensionalen Sensor fokussiert werden, da dadurch entweder unscharfe Bereiche der Beleuchtungsebene oder Verzerrungen des Abbildes der Beleuchtungsebene generiert werden können. Die Beleuchtungsebene ist gegenüber der Fokusebene des Objektivs um eine Verkippungsachse geneigt.

Üblicherweise wird in einem Schiefeebenenmikroskop aus dem Stand der Technik eine sogenannte Aufrichtungseinheit verwendet, welche das vom Objektiv generierte reelle Zwischenbild der um die Verkippungsachse verkippten Beleuchtungsebene scharf und unverzerrt auf einem zweidimensionalen Detektor abbildet, indem dessen Fokusebene durch Verkippen der Aufrichtungseinheit mit dem verkippten reellen Zwischenbild der Beleuchtungsebene in Deckung gebracht wird. Dies ist beispielsweise in der WO 2010/012980 A1 gezeigt.

Die Beobachtung aus unterschiedlichen Blickwinkeln oder auf einer Objektoberfläche liegender Messpunkte mittels eines Linsenarrays ist in der US 2014/0209821 A1 bzw. der DE 10 2008 031 412 A1 gezeigt. Die EP 2 587 295 A1 widmet sich dem Beleuchten einer Probe in einem SPIM Mikroskop und in der US 2012/0062997 A1 wird eine optische Vorrichtung mit gesteigerter Tiefenschärfe beschrieben. Die DE 10 2014 102 215 A1 betrifft ein Verfahren und eine Anordnung zur Lichtblattmikroskopie mit einer optischen Einrichtung zur Vergrößerung der Schärfentiefe des abbildenden Systems.

Die Aufrichtungseinheit dient allerdings lediglich der Bildaufrichtung und der Kompensation von sphärischen Aberrationen. Andere optische Fehler wie Koma, chromatische Aberrationen und ähnliche werden allerdings durch die zusätzlichen optischen Komponenten der Aufrichtungseinheit nicht kompensiert, sondern addieren sich auf.

Ziel der vorliegenden Erfindung ist es daher, eine optische Anordnung zur Detektion von Streu- und/oder Fluoreszenzlicht bzw. ein Mikroskop zu schaffen, welche bzw. welches auf eine Aufrichtungseinheit aus dem Stand der Technik verzichten kann, welche zudem weniger Platz und insbesondere weniger optische Komponenten benötigt und somit kostengünstiger ist und welche ferner problemlos mit einer Vielzahl von Objektiven zur Detektion betrieben werden kann.

Die optische Anordnung der eingangs genannten Art löst diese Aufgabe dadurch, dass die Vielzahl optischer Linsen Linsen unterschiedlicher Brennweite umfasst.

Die im Vergleich zum Tubussystem geringere numerische Apertur der Linsen aus der Vielzahl von Linsen resultiert in einem im Vergleich zum Tubussystem vergrößerten Tiefenschärfebereich, auch Schärfetiefenbereich oder *depth of field* (DOF) genannt, sodass ein sich entlang der optischen Achse der optischen Anordnung erstreckender, scharf abbildbarer Bereich vergrößert. Die Gesamtheit der Bereiche, die durch die einzelnen Linsen scharf abgebildet werden können, kann als Detektionsvolumen betrachtet werden. Die Ausdehnung des Detektionsvolumens entlang der optischen Achse kann durch Variation der DOF verändert werden, wohingegen die Ausdehnung senkrecht zur optischen Achse durch die Größe und/oder Anzahl der Vielzahl von Linsen bzw. die Größe des Objektivsystems bzw. Tubussystems festgelegt sein kann.

Die Verwendung von Linsen unterschiedlicher Brennweite hat den Vorteil, dass hierdurch die Lage des Schärfentiefebereiches der jeweiligen Linse auf der Objektseite variiert und insbesondere an die verkippte Beleuchtungsebene angepasst werden kann.

Die erfindungsgemäße optische Anordnung hat somit den Vorteil, dass keine separate Aufrichtungseinheit verwendet werden muss, um eine im Detektionsvolumen schief verlaufende, das heißt nicht senkrecht zur optischen Achse des Objektivs stehende Beleuchtungsebene auf einem zweidimensionalen Detektor abzubilden.

Die erfindungsgemäße optische Anordnung hat somit ferner den Vorteil, dass der Bereich der Beleuchtungsebene, der entlang der Beleuchtungsrichtung innerhalb der Schärfentiefe (DOF) des Beleuchtungslichtstrahls liegt, derart auf den Sensor abgebildet werden kann, dass er innerhalb der Schärfentiefen des Detektionssystems liegt.

Dies hat wiederum den Vorteil, dass der Transmissionsgrad des detektierten Streu- und/oder Fluoreszenzlichtes nicht durch eine Mehrzahl zusätzlicher Linsen der Aufrichtungseinheit verringert wird und der Aufbau der optischen Anordnung insgesamt vereinfacht, verkleinert und folglich kostengünstiger ausgestaltet sein kann. Ferner ermöglichen die erfindungsgemäßen Lösungen den Tausch des Objektivs bzw. des Objektivsystems an der Probe. Dies ist bei Verwendung einer Aufrichtungseinheit aus dem Stand der Technik schwierig, da sie auf das Objektiv an der Probe abgestimmt und justiert ist.

Das eingangs genannte Mikroskop löst die obige Aufgabe dadurch, dass die optische Anordnung eine erfindungsgemäße Anordnung ist. Die optische Anordnung zur Detektion kann zum Beispiel eine Einzellinse des Tubussystems gleicher Apertur wie die Vielzahl der Linsen sein. Somit profitiert auch das erfindungsgemäße Mikroskop von einem erhöhten DOF, der aus der verringerten numerischen Apertur der Vielzahl von Linsen herrührt. Somit kann auch das erfindungsgemäße Mikroskop aus weniger einzelnen Komponenten einfacher, platzsparender und folglich kostengünstiger hergestellt werden. Die Erfindung kann somit auch als Lichtfeldmikroskop mit Lichtblattbeleuchtung aufgefasst werden, bei dem nur ein einzelnes Objektiv für Beleuchtung und Detektion notwendig ist.

Das Objektivsystem der optischen Anordnung kann als eine Anordnung von mindestens einer optischen Linse verstanden werden, wobei bevorzugt mindestens zwei optische Linsen vorgesehen sind, sodass durch das Objektivsystem chromatische Fehler weitestgehend kompensiert werden können.

Im Tubussystem kann bevorzugt mindestens eine Tubuslinse vorgesehen sein, um das vom Objektivsystem aufgefangene Streu- und/oder Fluoreszenzlicht, welches nach dem Objektivsystem kollimiert sein kann, zu fokussieren. Die Fokussierung des Streu- und/oder Fluoreszenzlichtes kann, sofern keine weiteren optischen Elemente in den Strahlengang der optischen Anordnung eingebracht werden, in der sogenannten Tubus-Detektorebene liegen.

Die Vielzahl optischer Linsen, welche sich zwischen dem Tubussystem und der Tubus-Detektorebene befinden kann, verändert allerdings die Konvergenz des Streu- und/oder Fluoreszenzlichtes, sodass sich die Lage des Fokus durch Einbringen der Vielzahl von optischen Linsen verändert. In dieser Anordnung bildet die Vielzahl optischer Linsen das vom Objektiv erzeugte virtuelle Bild ab.

Die Vielzahl optischer Linsen kann sich auch von der Probe aus betrachtet jenseits, d.h. entlang der optischen Achse hinter der Tubus-Detektorebene befinden. Bei dieser Anordnung bildet die Vielzahl optischer Linsen das vom Objektiv erzeugte reelle Bild ab.

Die einzelnen Linsen der Vielzahl optischer Linsen sind bevorzugt Linsen positiver Brechkraft, d.h. fokussierende Linsen, sodass die optische Anordnung das Streu- und/oder Fluoreszenzlicht von der Objektseite in eine Detektorebene fokussiert, welche sich zwischen der Vielzahl optischer Linsen und der Tubus-Detektorebene befindet. Die Detektorebene entspricht der bildseitigen Fokusebene der erfindungsgemäßen optischen Anordnung.

Die Erfindung stellt somit eine technisch vorteilhafte Lösung zur Kombination eines Lichtfeld-Mikroskops mit einer Probenbeleuchtung durch ein Lichtblatt dar, wobei jedoch nur ein einzelnes Objektiv notwendig ist, um die Probe zu beleuchten und die von der Probe ausgehende Fluoreszenz zu detektieren.

Die erfindungsgemäße optische Anordnung und das erfindungsgemäße Mikroskop können durch die folgenden jeweils für sich vorteilhaften Ausgestaltungen weiter verbessert werden. Technische Merkmale der folgenden Ausgestaltungen können beliebig miteinander kombiniert bzw. weggelassen werden.

Die Tubus-Detektorebene kann eine virtuelle Tubus-Detektorebene sein. Tubus-Detektorebene und virtuelle Tubus-Detektorebene können im Folgenden synonym verwendet werden.

In einer Ausgestaltung der erfindungsgemäßen optischen Anordnung ist die Vielzahl von Linsen als Mikrolinsen-Array ausgestaltet. Ein Mikrolinsen-Array hat den Vorteil, dass Einzelne Linsen der Vielzahl optischer Linsen nicht separat in der optischen Anordnung positioniert werden müssen, sondern alle Linsen des Mikrolinsen-Arrays gemeinsam in der optischen Anordnung positioniert und/oder justiert werden können. Ferner hat ein Mikrolinsen-Array den Vorteil, dass die einzelnen Mikrolinsen eine numerische Apertur (NA) aufweisen, die im Allgemeinen geringer ist als die numerische Apertur separater optischer Linsen. Da sich die NA umgekehrt proportional zur DOF verhält, weisen die Mikrolinsen eines Mikrolinsen-Arrays im Allgemeinen einen höheren DOF auf als einzelne separate Linsen.

Das Mikrolinsen-Array kann insbesondere rechteckig ausgestaltet und/oder an einen Detektor angepasst sein. Eine Abbildung der Beleuchtungsebene durch das Mikrolinsen-Array kann bevorzugt die gleichen zweidimensionalen Abmessungen aufweisen wie der verwendete zweidimensionale Detektor.

In einer weiteren Ausgestaltung der optischen Anordnung ist zwischen dem Objektivsystem und dem Tubussystem ein Strahlteiler vorgesehen. Die Verwendung eines Strahlteilers hat den Vorteil, dass über diesen ein Beleuchtungsstrahlengang in die optische Anordnung eingekoppelt werden kann. Insbesondere kann der Beleuchtungsstrahlengang derart in die optische Anordnung eingekoppelt werden, dass dieser durch das Objektivsystem hindurch verläuft. Somit kann das Objektivsystem dazu genutzt werden, eine Probe, die auf der Objektseite des Objektivsystems angeordnet ist, mittels des über den Strahlteiler eingekoppelten Lichtes des Beleuchtungsstrahlenganges zu beleuchten und das von der Probe ausgesandte Streu- und/oder Fluoreszenzlicht durch dasselbe Objektivsystem von der Objektseite zur Tubusseite zu transmittieren.

Der Strahlteiler kann insbesondere ein dichroitischer Strahlteiler sein, welcher das eingekoppelte Licht der Beleuchtung im Wesentlichen vollständig reflektiert und das von der Probe ausgesandte Streu- und/oder Fluoreszenzlicht im Wesentlichen vollständig transmittiert. In dieser Ausgestaltung der optischen Anordnung weisen das Beleuchtungslicht und das von der Probe ausgesandte Streu- und/oder Fluoreszenzlicht eine voneinander unterschiedliche Wellenlänge auf. Diese Ausgestaltung kann also bei inelastischer Streuung des Beleuchtungslichtes verwendet werden. Insbesondere kann der Strahlteiler für einen Einfallswinkel von 45° ausgestaltet sein, sodass dieser eine Umlenkung der Propagationsrichtung des Beleuchtungslichtes um im Wesentlichen 90° realisieren kann.

In einer weiteren Ausgestaltung der optischen Anordnung ist zwischen dem Objektivsystem und dem Tubussystem eine Blende vorgesehen, die ein senkrecht zur optischen Achse des Objektivsystems verschobenes Zentrum aufweist. Eine derartig positionierte Blende hat den Vorteil, dass der durch die Blende vorgegebene Strahlengang des Streu- und/oder Fluoreszenzlichtes räumlich vom Strahlengang der Beleuchtung getrennt werden kann.

Insbesondere in einem Schiefeebenenmikroskop schneidet der Strahlengang des detektierten Streu- und oder Fluoreszenzlichtes den Strahlengang des Beleuchtungslichtes auf der Objektseite, d.h. in der Probe unter einem spitzen Winkel. Zur Verbesserung der lateralen Auflösung des Mikroskops kann dieser Winkel bevorzugt derart gewählt werden, dass er zwischen 45° und 90° beträgt, besonders bevorzugt kann der Winkel ein rechter Winkel sein. Von der Beleuchtungsebene ausgesandtes Streulicht wird gemäß der Streueigenschaften der Probe in einem Streukegel, Fluoreszenzlicht dagegen isotrop in den Halb- oder Vollraum abgestrahlt. Die Blende kann Streu- und/oder Fluoreszenzlicht ausblenden, dessen Richtung antiparallel zur Richtung der Beleuchtung ist.

Bei Verwendung eines einzelnen Objektivs großer numerischer Apertur bestimmt letztere einen Akzeptanzkegel, innerhalb welchem Licht durch das Objektiv propagieren kann. Innerhalb dieses Akzeptanzkegels befinden sich ein Detektionskegel und ein Beleuchtungskegel, welche jeweils durch eine numerische Apertur der optischen Anordnung zur Detektion bzw. zur Beleuchtung definiert sind.

Die erfindungsgemäße Blende definiert den Detektionskegel, so dass die Bereiche des Überlapps zwischen Detektionskegel und Beleuchtungskegel, entlang einer Detektionsachse gemessen, auf kleine Überlappungslängen beschränkt sein können. Unter kleinen Überlappungslängen ist zu verstehen, dass diese in der Größenordnung des fokussierten Beleuchtungskegels liegen. Bei Beleuchtung mit einem Lichtblatt kann ein solcher Überlapp beispielsweise ein einstelliges Vielfaches, z.B. das Ein- bis Vierfache der Dicke des Lichtblatts sein.

Allerdings kann insbesondere in der SCAPE Mikroskopie ein erhöhter Überlapp gewünscht sein, um eine höhere Sammeleffizienz der Detektion zu erreichen. In einem SCAPE Mikroskop kann somit eine maximale Sammeleffizienz der Detektion eingestellt werden, wobei die Blende verhindert, dass sich der Detektionskegel und der Beleuchtungskegel im Objektiv überlappen. Durch die Blende kann somit ein Kompromiss zwischen einer optimalen Ausnutzung des Akzeptanzkegels des Objektivs, einer ausreichend hohen Sammeleffizienz und der erreichbaren lateralen Auflösung eingestellt werden.

Die Blende kann bevorzugt kreisförmig ausgestaltet sein und einen festen Durchmesser aufweisen. Das Zentrum ist dabei als Mittelpunkt der kreisförmigen Öffnung anzusehen. Ebenso ist es möglich, dass die Blende, insbesondere die Blendenöffnung, variabel, d.h. einstellbar ist, sodass durch die variable Blende Abbildungsparameter wie die transmittiert Lichtmenge oder die DOF eingestellt werden können.

Die Blende kann sich bevorzugt zwischen dem Strahlteiler und dem Tubussystem befinden. Dies hat den Vorteil, dass der Beleuchtungsstrahlengang durch die Blende nicht beeinflusst wird.

In einer weiteren Ausgestaltung der optischen Anordnung ist die optische Achse des Tubussystems parallel versetzt zur optischen Achse des Objektivsystems angeordnet. Auch diese Ausgestaltung hat den Vorteil, dass sich die Strahlengänge des Beleuchtungslichtes und des aufgefangenen Streu- und/oder Fluoreszenzlichtes auf der Objektseite unter einem spitzen Winkel schneiden. Der Versatz dieser Ausgestaltung erzielt dieselbe technische Wirkung wie die zuvor genannte Blende, wobei dieser zusätzlich vorteilhafterweise die sogenannte Punktspreizfunktion (point spread function, kurz PSF) gerade abbildet.

Das Objektivsystem kann eine Fokusebene (eine objektseitige geometrische Fokusebene) definieren, die senkrecht zur optischen Achse des Objektivsystems angeordnet ist. Insbesondere bei Schiefeebenenmikroskopen wird ein Beleuchtungsstrahlengang derart in die optische Anordnung eingekoppelt, dass die sich ausbildende Beleuchtungsebene gegenüber der Fokusebene verkippt ist. Die Verkippung der Beleuchtungsebene gegenüber der Fokusebene erfolgt um eine Verkippungsachse, die im Wesentlichen parallel zur Fokusebene orientiert sein kann.

Die optische Achse des Tubussystems kann in eine Versetzungsrichtung parallel zur optischen Achse des Objektivsystems versetzt sein, wobei die Versetzungsrichtung senkrecht zur optischen Achse des Objektivsystems und senkrecht zur Verkippungsachse der Beleuchtungsebene orientiert ist.

Die Versetzung der optischen Achse des Tubussystems kann insbesondere mit der zuvor erwähnten festen oder variabel einstellbaren Blende kombiniert werden. Eine solche Versetzung hat den Vorteil, dass das Streu- und/oder Fluoreszenzlicht axialsymmetrisch (und nicht schräg) durch das Tubussystem hindurch transmittiert wird. Dies hat ferner, wie zuvor kurz erwähnt, den Vorteil, dass die Punktspreizfunktion (PSF) entlang der optischen Achse des Tubussystems ausgerichtet und somit nicht zum Sensor verkippt ist, bzw. nicht verkippt auf dem Sensor abgebildet oder projiziert wird.

In einer weiteren Ausgestaltung der optischen Anordnung ist zwischen dem Objektivsystem und dem Tubussystem ein reflektives System angeordnet. Ein reflektives System zum Einkoppeln bzw. Umlenken eines Beleuchtungsstrahlenganges und/oder eines Strahlenganges des Streu- und/oder Fluoreszenzlichtes hat den Vorteil, dass reflektive Systeme für breite Wellenlängenbereiche konzipiert sein können. Ferner ist der Reflexionsgrad reflektiver Systeme im Wesentlichen unabhängig vom Einfallswinkel des zu reflektierenden Lichtes.

Das reflektive System kann Spiegel und/oder Spiegelanordnungen und/oder ein Prisma bzw. eine Prismenanordnung umfassen.

Das reflektive System kann ferner ein sowohl für den Beleuchtungsstrahlengang als auch für den Strahlengang des Streu- und/oder Fluoreszenzlichtes genutztes gemeinsames reflektives Element umfassen, wobei der Beleuchtungsstrahlengang und der Strahlengang des Streu- und/oder Fluoreszenzlichtes in lokal voneinander getrennten Bereichen des gemeinsamen reflektiven Elementes auf dieses Treffen.

Weitere reflektive Elemente können sich lediglich im Beleuchtungsstrahlengang oder Strahlengang des Streu- und/oder Fluoreszenzlichtes befinden.

Diese Ausgestaltung kann weiter verbessert werden, indem mindestens ein reflektives Element des reflektiven Systems um mindestens eine Kippachse kippbar ist. Dies hat den Vorteil, dass durch das Verkippen des mindestens einen reflektiven Elements eine sogenannte virtuelle Beleuchtungsebene, auch: virtuelles Lichtblatt, generiert werden kann.

Als virtuelle Beleuchtungsebene ist ein im Wesentlichen zweidimensionaler beleuchteter Bereich zu verstehen, der sich aus zeitlich nacheinander generierten Foki des Beleuchtungslichtes zusammensetzt. Eine Scanrichtung des kippbaren reflektiven Elements bestimmt dabei eine erste, die Ausdehnung der Foki eine weitere geometrische Ausdehnung der Beleuchtungsebene.

Das mindestens eine reflektive Element des reflektiven Systems kann um zwei Kippachsen kippbar sein, wobei eine erste Kippachse das Verkippen des reflektiven Elementes mit einer im Vergleich zu einer Aufnahmerate eines Detektors hohen Frequenz erlaubt und die virtuelle Beleuchtungsebene ausbildet.

Das Verkippen des Beleuchtungsstrahlenganges um die erste Kippachse kann somit die Beleuchtungsebene generieren. Das Verkippen um eine zweite Verkippungsachse kann mit einer geringeren Frequenz als das Verkippen um die erste Kippachse erfolgen, sodass die generierte Beleuchtungsebene auf der Objektseite bewegt und somit durch die Probe hindurch gescannt werden kann. Bevorzugt sind beide Kippachsen im Wesentlichen senkrecht zueinander orientiert.

Die Brennweite der jeweiligen einzelnen Linse der Vielzahl von Linsen, insbesondere die Brennweite einer Mikrolinse bestimmt die Lage des Fokus auf der Objektseite, d. h. in der Probe, entlang der optischen Achse des zur jeweiligen Linse bzw. Mikrolinse gehörigen Strahlengangs. Der Fokus befindet sich in Richtung der optischen Achse zentral innerhalb der Ausdehnung des scharfen Bereichs im Objektraum.

Umfasst die Vielzahl optischer Linsen jeweils Linsen gleicher Brennweite, so befinden sich die Foki der jeweiligen Linse bzw. Mikrolinse in einer Ebene, die senkrecht zur optischen Achse des Objektivsystems orientiert ist. Aufgrund der DOF der jeweiligen Linse bzw. Mikrolinse bildet die Vielzahl von Linsen somit ein Detektionsvolumen heraus, welches hinlänglich scharf abgebildet werden kann.

Da insbesondere in einem Schiefeebenenmikroskop die Beleuchtungsebene gegenüber einer senkrecht zur optischen Achse des Objektivsystems stehenden Ebene verkippt ist, ist es in einer Ausgestaltung der erfindungsgemäßen optischen Anordnung vorteilhaft, die Lage der Foki entlang der optischen Achse des zur jeweiligen Linse bzw. Mikrolinse gehörigen Strahlengangs an die verkippte Beleuchtungsebene anzupassen.

Dies kann durch eine Variation der Brennweite der einzelnen Linsen bzw. Mikrolinsen realisiert werden. Eine Linse bzw. Mikrolinse mit geringerer Brennweite weist einen Fokus auf, der auf der Objektseite weiter entfernt vom Objektivsystem ausgebildet ist als der Fokus einer Linse bzw. Mikrolinse mit größerer Brennweite.

In einer weiteren Ausgestaltung der erfindungsgemäßen optischen Anordnung weisen nebeneinander angeordnete Linsen der Vielzahl optischer Linsen unterschiedliche Brennweiten auf. Mit einer solchen Anordnung kann die Lage der Foki der einzelnen Linsen bzw. Mikrolinsen an die verkippte Beleuchtungsebene angepasst werden.

Dies ist in einer weiteren Ausgestaltung vorteilhaft dadurch realisiert, dass die Brennweiten einzelner nebeneinanderliegender Linsen entlang einer im Wesentlichen senkrecht zur optischen Achse des Tubussystems verlaufenden Breitenrichtung stetig ansteigen oder sich stetig verringern. Die Breitenrichtung ist als jene Richtung zu verstehen, die sowohl senkrecht zur optischen Achse des Tubussystems als auch senkrecht zur Verkippungsachse der Beleuchtungsebene orientiert ist. Die Breitenrichtung kann der Versetzungsrichtung entsprechen.

Der Begriff "stetig" ist dabei in dem Sinne zu verstehen, dass sich die Brennweiten der einzelnen Linsen entlang der Breitenrichtung entweder vergrößern oder verkleinern, d. h. dass sich die Richtung der Änderung der Brennweite entlang bzw. entgegen der Breitenrichtung nicht ändert.

In einer weiteren Ausgestaltung der optischen Anordnung sind wenigstens zwei einzelne Linsen der Vielzahl optischer Linsen in einem unterschiedlichen Abstand von der Objektseite angeordnet. Dies hat den Vorteil, dass für alle einzelnen Linsen bzw. Mikrolinsen der Vielzahl von Linsen der Abbildungsmaßstab angeglichen werden kann.

Bevorzugt wird die optische Anordnung in einem Schiefeebenenmikroskop verwendet, in welchem, wie oben bereits geschrieben, eine Beleuchtungsebene verkippt zur Fokusebene des Objektivsystems in einem Probenvolumen generiert wird. Unterschiedliche Bereiche der verkippten Beleuchtungsebene sind somit unterschiedlich weit vom Objektivsystem entfernt, d. h., dass diese unterschiedlichen Bereiche eine unterschiedliche Objektweite aufweisen.

Aufgrund der verringerten numerischen Apertur der einzelnen Linsen bzw. Mikrolinsen der Vielzahl von Linsen bildet jede der einzelnen Linsen bzw. Mikrolinsen bevorzugt lediglich einen Bereich der Beleuchtungsebene ab, wobei sich die abgebildeten Bereiche unterschiedlicher einzelner Linsen bzw. Mikrolinsen voneinander unterscheiden können. Wird der Abstand identischer einzelner Linsen bzw. Mikrolinsen zu einem Detektor für alle der einzelnen Linsen bzw. Mikrolinsen auf einen gemeinsamen Wert festgelegt, so ändert sich mit der Objektweite der einzelnen Bereiche der Beleuchtungsebene der Abbildungsmaßstab des jeweils von einer einzelnen Linse bzw. Mikrolinse abgebildeten Bereiches. Der Abbildungsmaßstab variiert folglich in, beziehungsweise entgegen der Breitenrichtung.

Um den Abbildungsmaßstab für alle der Vielzahl optischer Linsen im Wesentlichen auf einen gemeinsamen Wert festzulegen, werden in dieser Ausgestaltung der optischen Anordnung die einzelnen Linsen, beziehungsweise Mikrolinsen, welche Bereiche der Beleuchtungsebene abbilden, die eine größere Objektweite aufweisen, folglich näher zur Objektseite hin, d. h. näher zum Tubus- bzw. Objektivsystem hin angeordnet als einzelne Linsen bzw. Mikrolinsen, welche Bereiche der Beleuchtungsebene abbilden, die eine geringere Objektweite aufweisen.

In einer weiteren Ausgestaltung der erfindungsgemäßen optischen Anordnung ändert sich der Abstand der einzelnen Linsen von der Objektseite in einer Breitenrichtung stetig. Dies hat den Vorteil, dass durch die stetige Änderung der Bildweite, d. h. dem Abstand der jeweiligen von der einzelnen Linse generierten Abbildung zur einzelnen Linse bzw. Mikrolinse, der Abbildungsmaßstab für alle Bereiche der verkippten Beleuchtungsebene im Wesentlichen gleich ist.

Insbesondere können in einer weiteren Ausgestaltung die einzelnen Linsen jeweils in einem Abstand von der Objektseite angeordnet sein, der in Abhängigkeit der Brennweite der jeweiligen Linse festgelegt ist, wobei sich der Abstand der jeweiligen einzelnen Linse von der Objektseite im Wesentlichen direkt proportional zur Brennweite der einzelnen Linse verhält. Somit kann zeitgleich der zentrale Fokusbereich eines Teil-Systems, umfassend eine einzelne Linse, das Tubussystem und das Objektivsystem mit dem abzubildenden Bereich der verkippten Beleuchtungsebene in Überlappung gebracht werden und der Abbildungsmaßstab des abzubildenden Bereiches der verkippten Beleuchtungsebene auf einen vorbestimmten Wert eingestellt werden. Dies ermöglicht die Abbildung des Streu- und/oder Fluoreszenzlichts aus der verkippten Beleuchtungsebene der Probe in einem über die Abbildung konstanten im Wesentlichen konstanten Abbildungsmaßstab mit hoher Schärfe.

Die Schärfe ist als die Unterscheidbarkeit von abzubildenden Details zu verstehen und ist unter anderem abhängig von der numerischen Apertur des optischen Teil-Systems, umfassend eine jeweilige Linse bzw. Mikrolinse der Vielzahl von Linsen, dem Tubussystem und dem Objektivsystem, sowie die Entfernung des abzubildenden Bereiches der verkippten Beleuchtungsebene von der objektseitigen Fokusebene des Teil-Systems.

Das eingangs erwähnte erfindungsgemäße Mikroskop kann einen Beleuchtungsstrahlengang aufweisen, der durch die optische Beleuchtungsanordnung nicht-kollinear zu einem Detektionsstrahlengang durch die optische Anordnung zur Detektion verläuft. Ferner kann zusätzlich oder alternativ mindestens ein optisches Element zeitgleich im Beleuchtungsstrahlengang und im Detektionsstrahlengang angeordnet sein.

In einer weiteren Ausgestaltung des erfindungsgemäßen Mikroskops ist die Vielzahl der Linsen als Mikrolinsen-Array ausgestaltet. Dies hat den Vorteil, dass einzelne Linsen der Vielzahl optischer Linsen gemeinsam positioniert und/oder justiert werden können und jede der einzelnen Linsen bzw. einzelnen Mikrolinsen eine numerische Apertur aufweist, die im allgemeinen geringer ist als die numerische Apertur separater optischer Linsen mit der gleichen Apertur wie das Mikrolinsen-Array. Die verringerte numerische Apertur hat eine Erhöhung der DOF zur Folge.

Das Mikroskop kann einen Strahlteiler oder ein um mindestens eine Achse kippbares reflektives Element aufweisen. Der Strahlteiler oder das reflektive Element kann sich sowohl im Beleuchtungsstrahlengang als auch im Detektionsstrahlengang des Streu- und/oder Fluoreszenzlichts befinden.

Im Folgenden werden jeweils für sich vorteilhafte Ausgestaltungen der vorliegenden Erfindung anhand beigefügter Zeichnungen näher erläutert. Technische Merkmale der Ausgestaltungen können dabei beliebig miteinander kombiniert und/oder weggelassen werden, sofern es nicht auf den mit dem technischen Merkmal erzielten technischen Effekt ankommt. Gleiche technische Merkmale und technische Merkmale gleicher Funktion sind dabei mit dem gleichen Bezugszeichen versehen.

Es zeigen:
- Fig. 1: eine erste Ausgestaltung der erfindungsgemäßen optischen Anordnung;
- Fig. 2: eine zweite Ausgestaltung der erfindungsgemäßen optischen Anordnung;
- Fig. 3a: eine dritte Ausgestaltung der erfindungsgemäßen optischen Anordnung;
- Fig. 3b: eine vierte Ausgestaltung der erfindungsgemäßen optischen Anordnung;
- Fig. 4: eine fünfte Ausgestaltung der erfindungsgemäßen optischen Anordnung; und
- Fig. 5: eine sechste Ausgestaltung der erfindungsgemäßen optischen Anordnung.

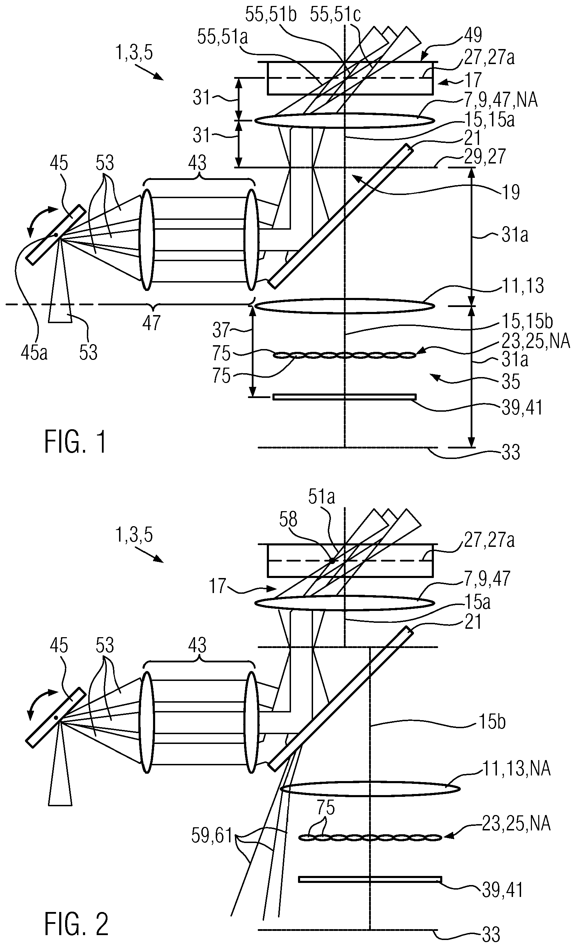

In Fig. 1 ist eine erste Ausgestaltung der erfindungsgemäßen optischen Anordnung 1 schematisch dargestellt. Die optische Anordnung 1 verdeutlicht Strahlengänge, die in einem Mikroskop 3, insbesondere in einem Schiefeebenenmikroskop 5 auftreten können. Das Mikroskop 3 bzw. das Schiefeebenenmikroskop 5 als solche sind in den Figuren nicht gezeigt, können allerdings eine Ausgestaltung der erfindungsgemäßen optischen Anordnung 1 enthalten.

Die optische Anordnung 1 umfasst ein Objektivsystem 7, was in der gezeigten Ausführungsform lediglich eine Objektivlinse 9 umfasst, in anderen Ausführungsform allerdings mehrere Linsen umfassen kann. Ferner umfasst die optische Anordnung 1 ein Tubussystem 11, welches in der gezeigten Ausgestaltung lediglich eine Tubuslinse 13 umfasst. Auch das Tubussystem 11 kann in anderen Ausgestaltungen mehr als eine Tubuslinse 13 umfassen.

Sowohl das Objektivsystem 7 als auch das Tubussystem 11 weisen eine optische Achse 15 auf, wobei sich die optische Achse des Objektivsystems 15a in Überdeckung mit der optischen Achse des Tubussystems 15b befindet.

Das Objektivsystem 7 weist eine Objektseite 17 und eine Tubusseite 19 auf, wobei sich das Tubussystem 11 auf der Tubusseite 19 des Objektsystems 7 befindet.

Zwischen dem Objektivsystem 7 und dem Tubussystem 11 ist ein Strahlteiler 21 unter einem Winkel von im Wesentlichen 45° zur optischen Achse 15 angeordnet.

Ferner weist die optische Anordnung 1 eine Vielzahl optischer Linsen 23 auf, die als Mikrolinsen-Array 25 ausgestaltet ist.

Die Objektivlinse 9, die Tubuslinse 13 und auch einzelne Linsen 75 des Mikrolinsen-Arrays 25 weisen jeweils eine numerische Apertur NA auf, wobei die numerische Apertur NA der einzelnen Linsen 75 in der Regel kleiner ist als die numerische Apertur NA der Objektivlinse 9 oder der Tubuslinse 13.

Der Einfachheit halber wird im Folgenden von dünnen Linsen ausgegangen, so dass Brennweiten einer Linse lediglich mit Bezug zur Lage der Linse und nicht mit Bezug zur Lage der Hauptebenen der Linse angegeben werden.

Das Objektivsystem 7 weist eine objektseitige Brennebene 27 und eine bildseitige Brennebene 29 auf, die jeweils im Abstand der Brennweite 31 der Objektivlinse 9 von dieser entfernt liegen.

Die bildseitige Brennebene 29 der Objektivlinse 9 ist zugleich die objektivseitige Brennebene 27 der Tubuslinse 13, die sich im Abstand der Brennweite der Tubuslinse 31a von dieser entfernt befindet.

Die bildseitige Brennebene 29 der Tubuslinse 13 befindet sich ebenfalls im Abstand der Brennweite der Tubuslinse 31a von dieser entfernt und bildet eine virtuelle Tubus-Detektorebene 33 heraus.

Die Brennweite der Tubuslinse 31a wird auf der Bildseite 35 des Tubussystems 11 durch die Vielzahl optischer Linsen 23 verkürzt, so dass sich eine nominelle Brennweite 37 ergibt. Eine Detektorebene 39 ist im Abstand der nominellen Brennweite 37 von der Tubuslinse 13 entfernt angeordnet. In der Detektorebene 39 ist in der in Fig. 1 gezeigten Ausgestaltung ein Detektor 41 angeordnet.

Ferner ist in Fig. 1 eine telezentrische 4f-Optik 43 und ein Kippspiegel 45 gezeigt. Diese sind Bestandteil einer Beleuchtungsanordnung 47 des Mikroskops 3, wobei das Objektivsystem 7, d. h. die Objektivlinse 9 ebenso Teil der Beleuchtungsanordnung 47 ist.

Die Beleuchtung der Probe (nicht gezeigt) wird über den Strahlteiler 21, welcher einen dichroitische Strahlteiler 21a sein kann, eingekoppelt und mittels des Objektivsystems 7 in einem Fokusvolumen 49 fokussiert, so dass sich eine Beleuchtungsebene 51 bzw. ein Lichtblatt herausbildet.

In Fig. 1 sind drei Beleuchtungsstrahlengänge 53 gezeigt, die sich beim Verkippen des Kippspiegels 45 um eine Kippachse 45a ergeben.

Durch den Kippspiegel 45 und die telezentrische 4f-Optik 43 kann der Beleuchtungsstrahlengang 53 in der objektseitigen Brennebene 27 der Objektivlinse 9, d. h. in deren hinteren Brennebene 27a verkippt und dadurch die Beleuchtungsebene 51 in der Probe (nicht gezeigt) versetzt werden. Dies ist schematisch durch eine erste 51a, zweite 51b und dritte Beleuchtungsebene 51c in Fig. 1 dargestellt.

In Fig. 1 ist gezeigt, dass die Foki 55 entlang der optischen Achse des Objektivsystems 15a idealerweise in der Mitte des Fokusvolumens 49 liegen. Dies kann dadurch erreicht werden, dass die Beleuchtungsstrahlengänge 53 vorfokussiert bzw. defokussiert in das Objektivsystem 7 ein gekoppelt werden.

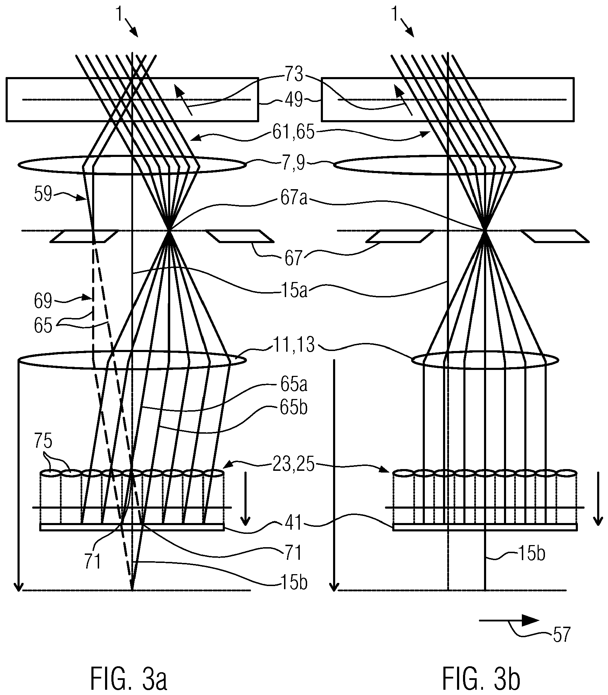

In Fig. 1 ist das aus dem Fokusvolumen 49 ausgesandte Streu- und/oder Fluoreszenzlicht 61 noch nicht gezeigt. In den Fig. 3a und 3b sind die Strahlengänge des Streu- und/oder Fluoreszenzlichtes 61 eingezeichnet.

In Fig. 2 ist eine zweite Ausgestaltung der erfindungsgemäßen optischen Anordnung 1 schematisch dargestellt, wobei im Unterschied zur Ausgestaltung der Fig. 1 die optische Achse des Objektivsystems 15a und die optische Achse des Tubussystems 15b in dieser Ausgestaltung nicht in Überdeckung sind.

Die optische Achse des Tubussystems 15b ist entlang einer Breitenrichtung 57 gegenüber der optischen Achse des Objektivsystems 15a verschoben. Die Breitenrichtung 57 ist senkrecht zu den optischen Achsen 15a, 15b und senkrecht zu einer Verkippungsachse 58 der Beleuchtungsebenen 51 orientiert. Die Verkippungsachse 58 ragt aus der Zeichenebene heraus bzw. in diese hinein und ist lediglich für die erste Beleuchtungsebene 51a als Punkt eingezeichnet.

Für die Beleuchtungsstrahlengänge 53 bleibt in der in Fig. 2 gezeigten Ausgestaltung der optischen Anordnung 1 der Strahlverlauf identisch zur Ausgestaltung der Fig. 1. Lediglich für die Detektion des Streu- und/oder Fluoreszenzlichtes (nicht gezeigt, siehe hierzu Figuren 3a und 3b) ergeben sich konstruktive Unterschiede, da z. B. Strahlanteile 59 des Streu- und/oder Fluoreszenzlichtes 61 am Mikrolinsen-Array 25 als auch am Detektor 41 vorbeilaufen und z. B. an einer nicht gezeigten Halterung der Tubuslinse 13, des Mikrolinsen-Array 25 bzw. des Detektor 41 geblockt werden.

Diese Strahlenteile 59, welche aus etwa der gleichen Richtung betrachtet werden, aus der die Probe (nicht gezeigt) im Fokusvolumen 49 beleuchtet wird, sind in einem Schiefeebenenmikroskop 5 unerwünscht, da diese Anteile den Bildkontrast verschlechtern würden

Bei Betrachtung der Probe aus etwa der gleichen Richtung, aus der die Probe beleuchtet wird, sind die Auflösung und/oder der Kontrast nicht so gut, wie in dem Fall, in dem die Betrachtung senkrecht auf die Beleuchtungsebene erfolgt. Die Abbildung aus einer Richtung, die in etwa der Beleuchtungsrichtung entspricht, sollte also vermieden werden.

In den Fig. 3a und 3b sind die Strahlengänge 63 des aus dem Fokusvolumen 49 aufgefangenen Streu- und/oder Fluoreszenzlichtes anhand der jeweiligen Hauptstrahlen 65 schematisch dargestellt.

Sowohl in der in Fig. 3a gezeigten dritten Ausgestaltung der optischen Anordnung 1, welche im Wesentlichen auf der optischen Anordnung der Fig. 1 basiert, als auch in der in Fig. 3b gezeigten vierten Ausgestaltung der optischen Anordnung 1, diese basiert im Wesentlichen auf Fig. 2, ist eine Blende 67 in die jeweiligen Strahlengänge 63 eingebracht. Die Hauptstrahlen 65 verlaufen jeweils durch Zentren 67a der jeweiligen Blenden 67. In Fig. 3a ist ein Strahlanteil 59 gezeigt, der in etwa einer Betrachtung aus der gleichen Richtung entspricht, aus der die entsprechende Beleuchtungsebene 51 auch beleuchtet wird. Dieser Strahlanteil 59 wird jedoch von der Blende 67 blockiert.

Zur Veranschaulichung ist der theoretische Strahlengang 69 des besagten Strahlanteils 59 anhand von zwei Hauptstrahlen 65 gezeigt. Diese Hauptstrahlen 65 könnten sich ausbilden, wenn keine Blende 67 in die optische Anordnung 1 eingebracht ist. Die theoretischen Strahlengänge 69 würden durch die Vielzahl von Linsen 23, d. h. das Mikrolinsen-Array 25 hindurch auf den Detektor 41 treffen und dort mit weiteren Hauptstrahlen 65, beispielsweise dem Hauptstrahl 65a und dem Hauptstrahl 65b an einer gemeinsamen Fokusposition 71 auf den Detektor 41 treffen. An diesen Fokuspositionen 71 wäre die von der Beleuchtungsebene 51 beleuchtete Probe (nicht gezeigt) nicht mehr lateral aufgelöst.

Die Blende 67 der dritten und vierten Ausgestaltung der erfindungsgemäßen optischen Anordnung verhindert jedoch, dass derartige Strahlanteile 59 auf den Detektor 41 gelangen können. Die Blende 67 selektiert somit jene Strahlengänge 63 des Streu- und/oder Fluoreszenzlichtes 61, die im Wesentlichen aus einer Detektionsrichtung 73 betrachtet werden, die im Wesentlichen senkrecht zur Beleuchtungsrichtung, d. h. der Orientierung der Beleuchtungsebene 51 orientiert ist.

Die in den Fig. 3a und 3b gezeigten Ausgestaltung der erfindungsgemäßen optischen Anordnung 1 unterscheiden sich ferner dadurch, dass in der dritten Ausgestaltung der Fig. 3a die Tubuslinse 13 der ersten Ausgestaltung der Fig. 1 genutzt wird, so dass die durch die Blende 67 selektierten Hauptstrahlen 65 schräg durch die Tubuslinse 13 hindurch treten. Dies kann zu Aberrationen wie zum Beispiel Astigmatismus oder Koma führen.

Derartige zusätzliche, aufgrund schräg durch eine Linse verlaufender Strahlen entstehende Aberrationen können dadurch vermieden werden, dass die Tubuslinse 13 derart ausgestaltet bzw. orientiert ist, dass die optische Achse des Tubussystems 15b entlang der Breitenrichtung 57 gegenüberder optischen Achse des Objektivsystems 15a verschoben ist. Dies hat den Vorteil, dass die Hauptstrahlen 65, die durch die Blende 67 selektiert werden, im Wesentlichen gerade durch die Tubuslinse 13 hindurch verlaufen und somit mögliche auftretende Aberrationen reduziert oder gar verhindert werden können.

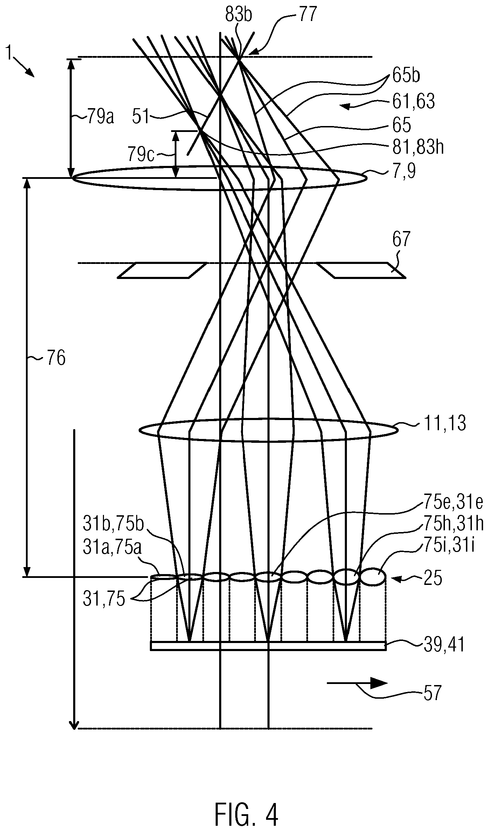

In Fig. 4 ist eine fünfte Ausgestaltung der erfindungsgemäßen optischen Anordnung 1 dargestellt. Diese umfasst, wie die in Figur 3b gezeigte vierte Ausgestaltung, das aus der Objektivlinse 9 bestehende Objektivsystem 7, die Blende 67, das aus der Tubuslinse 13 bestehende Tubussystem 11 und ein Mikrolinsen-Array 25, welches das Streu- und/oder Fluoreszenzlicht 61 auf den in der Detektorebene 39 positionierten Detektor 41 abbildet. Das Mikrolinsen-Array 25 ist in einem Abstand von der Objektseite 76 von der Objektivlinse 9 angeordnet.

Die in Fig. 4 gezeigte Ausgestaltung unterscheidet sich zu den zuvor gezeigten Ausgestaltungen darin, dass das verwendete Mikrolinsen-Array 25 keine einzelnen Linsen 75 identischer Brennweite 31 aufweist, sondern die Brennweite 31 unterschiedlicher einzelner Linsen 75 über das Mikrolinsen-Array 25 hinweg variiert sind. Dies ist schematisch in Fig. 4 anhand der einzelnen Linsen 75a bis 75h dargestellt, wobei die einzelne Linse 75a eine Brennweite 31a aufweist, die geringer ist als die Brennweite 31b die der einzelnen Linse 75b. Der Übersichtlichkeit halber sind nicht alle einzelnen Linsen 75b bis 75h und deren Brennweiten 31b bis 31h in Fig. 4 eingezeichnet.

Die Brennweiten 31a bis 31i verringern sich somit stetig in Abhängigkeit von der Position der entsprechenden einzelnen Linse 75a bis 75i in der Breitenrichtung 57.

In Fig. 4 ist ferner dargestellt, dass die eingezeichneten Strahlengängen 63 des Streu- und/oder Fluoreszenzlichtes 61 sowohl den Hauptstrahl 65a als auch Randstrahlen 65b umfassen, wobei diese lediglich für einen ersten Bereich 77 der Beleuchtungsebene 51 mit Bezugszeichen versehen sind.

Der erste Bereich 77 der Beleuchtungsebene 51 weist einen ersten Abstand 79a von der Objektivlinse 9 auf, der größer ist als ein dritter Abstand 79c eines dritten Bereiches 81 der Beleuchtungsebene 51.

Die Brennweite 31a bis 31i der einzelnen Linsen 75a bis 75i ist in der in Fig. 4 gezeigten Ausgestaltung der erfindungsgemäßen optischen Anordnung 1 derartig ausgestaltet, dass sich die objektseitigen Fokuspunkte 83 umgekehrt proportional zur entsprechenden Brennweite 31 verhalten. Dies ist in Fig. 4 anhand der einzelnen Linsen 75b, 75e und 75h dargestellt. Die einzelne Linse 75b hat die Brennweite 31b, welche kleiner ist als die Brennweite 31d, welche wiederum geringer ist als die Brennweite 31a der einzelnen Linse 75a. Die einzelne Linse 75b weist somit den objektseitigen Fokuspunkt 83b auf, der im ersten Abstand 79a von der Objektivlinse 9 entfernt ist. Die einzelne Linse 75h weist die kürzere Brennweite 31h auf, welche dazu führt, dass der objektseitige Fokuspunkt 83h im dritten Abstand 79c von der Objektivlinse 9 entfernt ausgebildet wird.

Die Lage der objektivseitigen Fokuspunkte 83 entspricht dabei im Wesentlichen den entsprechenden Bereichen, z. B. dem ersten Bereich 77 bzw. dem dritten Bereich 81, der Beleuchtungsebene 51, so dass die objektseitigen Fokuspunkte 83 an die verkippte Beleuchtungsebene 51 angepasst sind.

Die in den Figuren gezeigten Mikrolinsen-Array 25 können einzelne Linsen 75 umfassen, die in einem quadratischen Muster angeordnet sein können, allerdings können die einzelnen Linsen 75 vorteilhafter Weise auch in einem hexagonalen Gitter angeordnet sein. Die Abstufung benachbarter einzelner Linsen 75 kann in diskreten Schritten erfolgen. Insbesondere können die einzelnen Linsen 75, respektive die einzelnen Mikrolinsen (nicht gezeigt) in unterschiedlichen Ebenen angeordnet sein, d. h., dass die einzelnen Linsen 75 in unterschiedlichen Entfernungen zur Tubuslinse 13 bzw. zum Detektor 41 in der optischen Anordnung 1 angeordnet sein können. Dies hat zur Folge, dass durch die Variation der Entfernung der einzelnen Linsen 75 zur Tubuslinse 13 bzw. zum Detektor 41 der Abbildungsmaßstab in Breitenrichtung 57 über das komplette Mikrolinsen-Array 25 konstant eingestellt werden kann.

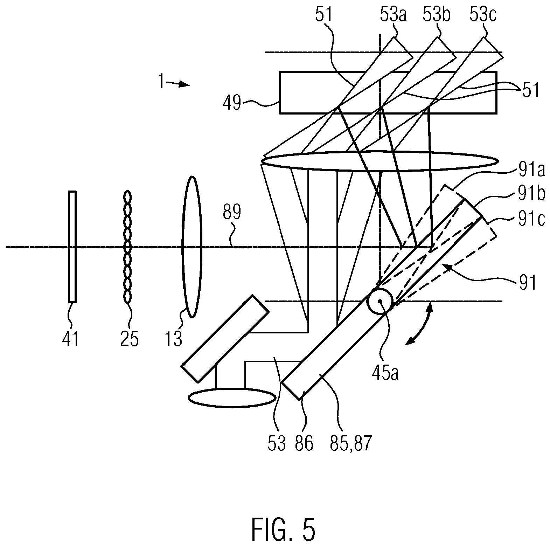

In Fig. 5 ist eine sechste Ausgestaltung der erfindungsgemäßen optischen Anordnung 1 gezeigt. In dieser ist anstelle eines Strahlteilers 21 ein reflektives System 85 in der optischen Anordnung 1 vorgesehen. Das reflektive System 85 der in Fig. 5 gezeigten Ausgestaltung umfasst einen als reflektives Element 86 ausgestalteten Spiegel 87, welcher um die Kippachse 45a kippbar ist, so dass zum einen der Beleuchtungsstrahlengang 53 durch das Fokusvolumen 49 hindurch gescannt werden kann (dies ist anhand von drei unterschiedlichen Beleuchtungsstrahlengängen 53 in Fig. 5 dargestellt) und zum anderen der Detektionsstrahlengang 89 unverändert bleibt.

In Fig. 5 ist gezeigt, dass ein erster Beleuchtungsstrahlengang 53a in einer ersten Kippstellung 91a, ein zweiter Beleuchtungsstrahlengang 53b in einer zweiten Kippstellung 91b und ein dritter Beleuchtungsstrahlengang 53c in einer dritten Kippstellung 91c des Spiegels 87 erhalten werden. Die erste 91a und dritte Kippstellung 91c sind in Fig. 5 lediglich durch eine gestrichelte Linie angedeutet.

Aufgrund der Verkippung des Spiegels 87 wird ein erster 89a, ein zweiter 89b als auch ein dritter Detektionsstrahlengang 89c jeweils auf ein- und denselben Detektionsstrahlengang 89 umgelenkt, so dass weder die Tubuslinse 13 noch das Mikrolinsen-Array 25 oder der Detektor 41 in Abhängigkeit von einer Kippstellung 91 des Spiegels 87 nachgestellt werden müssen. Durch das Verkippen des Spiegels 87 wird somit sowohl die Beleuchtungsebene 51 als auch der Detektionsbereich parallel versetzt.

Im Allgemeinen besteht ein wichtiger Aspekt der erfindungsgemäßen optischen Anordnung 1 und insbesondere die Verwendung von einem Mikrolinsen-Array 25 darin, dass die einzelnen Linsen 75 eine verringerte numerische Apertur aufweisen. Dies verringert einerseits die Anfälligkeit der Abbildung auf sphärische Aberrationen deutlich, andererseits wird jedoch auch die Auflösung reduziert. Ein wichtiger Aspekt einer geeigneten Bildverarbeitung besteht deshalb darin, die Bilder des Streu- und/oder Fluoreszenzlichtes, die von einzelnen Linsen 75 von einer geeigneten Struktur aufgenommen werden, zu verrechnen. Dies kann insbesondere durch eine sogenannte *multiview deconvolution,* also eine Entfaltung unter Einbezug der unterschiedlichen Blickrichtungen der einzelnen Teilbilder, geschehen.

## Patentansprüche

1. Optische Anordnung (1) zur Detektion von Streu- und/oder Fluoreszenzlicht (61) in einem Schiefeebenenmikroskop (5), umfassend ein Objektivsystem (7) mit einer optischen Achse (15a) zum Auffangen und Transmittieren des Streu- und/oder Fluoreszenzlichtes (61) von einer Objektseite (17) zu einer Tubusseite (19), ein auf der Tubusseite (19) des Objektivsystems (7) befindliches Tubussystem (11), umfassend mindestens eine Tubuslinse, mit einer optischen Achse (15b) zum Fokussieren des vom Objektivsystem (7) aufgefangenen Streu- und/oder Fluoreszenzlichtes (61) in einer Tubus-Detektorebene (33), wobei eine Vielzahl von optischen Linsen (23) zwischen dem Tubussystem (11) und der virtuellen Tubus-Detektorebene (33) angeordnet sind, wobei die Vielzahl von Linsen (23) im Wesentlichen simultan das Streu- und/oder Fluoreszenzlicht (61) transmittieren und in eine von der Tubus-Detektorebene (33) beabstandete Detektorebene (39) fokussieren und wobei jede Linse (75) aus der Vielzahl der Linsen (23) eine geringere numerische Apertur (NA) aufweist als das Tubussystem (11) **dadurch gekennzeichnet, dass** die Vielzahl von optischen Linsen (23) Linsen (75) unterschiedlicher Brennweite (31) umfasst, derart, dass die Lage des Schärfetiefebereichs der jeweiligen Linse (75) an die verkippte Beleuchtungsebene des Schiefeebenenenmikroskops (5) angepasst werden kann.

2. Optische Anordnung (1) nach Anspruch 1, **dadurch gekennzeichnet, dass die** Tubus-Detektorebene (33) eine virtuelle Tubus-Detektorebene ist.

3. Optische Anordnung (1) nach Anspruch 1 oder 2, **dadurch gekennzeichnet, dass** die Vielzahl von Linsen (23) als Mikrolinsen-Array (25) ausgestaltet ist.

4. Optische Anordnung (1) nach einem der Ansprüche 1 bis 3, **dadurch gekennzeichnet, dass** zwischen dem Objektivsystem (7) und dem Tubussystem (11) ein Strahlteiler (21) vorgesehen ist.

5. Optische Anordnung (1) nach einem der Ansprüche 1 bis 4, **dadurch gekennzeichnet, dass** zwischen dem Objektivsystem (7) und dem Tubussystem (11) eine Blende (67) vorgesehen ist, die ein senkrecht zur optischen Achse des Objektivssystems (15a) verschobenes Zentrum (67a) aufweist.

6. Optische Anordnung (1) nach einem der Ansprüche 1 bis 5, **dadurch gekennzeichnet, dass** die optische Achse des Tubussystems (15b) parallel versetzt zur optischen Achse des Objektivssystems (15a) angeordnet ist.

7. Optische Anordnung (1) nach einem der Ansprüche 1 bis 3, **dadurch gekennzeichnet, dass** zwischen dem Objektivsystem (7) und dem Tubussystem (11) ein reflektives System (85) angeordnet ist.

8. Optische Anordnung (1) nach Anspruch 7, **dadurch gekennzeichnet, dass** mindestens ein reflektives Element (86) des reflektiven Systems (85) um mindestens eine Kippachse (45a) kippbar ist.

9. Optische Anordnung (1) nach Anspruch 1 bis 8, **dadurch gekennzeichnet, dass** nebeneinander angeordnete Linsen (75) der Vielzahl von optischen Linsen (23) unterschiedliche Brennweiten (31) aufweisen.

10. Optische Anordnung (1) nach einem der Ansprüche 1 bis 9, **dadurch gekennzeichnet, dass** die Brennweiten (31) einzelner nebeneinanderliegender Linsen (75) entlang einer im Wesentlichen senkrecht zur optischen Achse des Tubussystems (15b) verlaufenden Breitenrichtung (57) stetig ansteigen oder sich stetig verringern.

11. Optische Anordnung (1) nach einem der Ansprüche 1 bis 10, **dadurch gekennzeichnet, dass** wenigstens zwei einzelnen Linsen (75) der Vielzahl optischer Linsen (23) in einem unterschiedlichen Abstand (76) von der Objektseite (17) angeordnet sind.

12. Optische Anordnung (1) nach Anspruch 11, **dadurch gekennzeichnet, dass** sich der Abstand (76) der einzelnen Linsen (75) von der Objektseite (17) in Breitenrichtung (57) stetig ändert.

13. Optische Anordnung (1) nach Anspruch 11 oder 12, **dadurch gekennzeichnet, dass** die einzelnen Linsen (75) jeweils in einem Abstand (76) von der Objektseite (17) angeordnet sind, der in Abhängigkeit der Brennweite (31) der jeweiligen Linse (75) festgelegt ist, wobei sich der Abstand (76) der jeweiligen einzelnen Linse (75) von der Objektseite (17) im Wesentlichen direkt proportional zur Brennweite (31) der einzelnen Linse (75) verhält.

14. Schiefeebenenmikroskop (5), umfassend eine optische Beleuchtungsanordnung (47) zur Beleuchtung einer Probe, die sich in einem durch die optische Beleuchtungsanordnung (47) definierten Detektionsvolumen (49) befindet, und eine optische Anordnung (1) zur Detektion von Streu- und/oder Fluoreszenzlicht (61) aus dem Detektionsvolumen (47), **dadurch gekennzeichnet, dass** die optische Anordnung (1) eine optische Anordnung (1) nach einem der Ansprüche 1 bis 13 ist.

## Claims

1. An optical arrangement (1) for detecting scattered and/or fluorescent light (61) in an inclined plane microscope (5) comprising an objective system (7) having an optical axis (15a) for collecting and transmitting the scattered and/or fluorescent light (61) from an object side (17) to a tube side (19), a tube system (11) located on the tube side (19) of the objective system (7) comprising at least one tube lens having an optical axis (15b) for focussing the scattered and/or fluorescent light (61) collected by the objective system (7) in a tube detector plane (33), wherein a plurality of optical lenses (23) are arranged between the tube system (11) and the virtual tube detector plane (33), wherein the plurality of lenses (23) substantially simultaneously transmit the scattered and/or fluorescent light (61) and focus it into a detector plane (39) spaced apart from the tube detector plane (33), and wherein each lens (75) of the plurality of lenses (23) includes a smaller numerical aperture (NA) than the tube system (11), **characterised in that** the plurality of optical lenses (23) comprise lenses (75) of different focal lengths (31) such that the position of the range of depth of field of the respective lens (75) can be adapted to the tilted illumination plane of the inclined plane microscope (5).

2. The optical arrangement (1) according to claim 1, **characterised in that** the tube detector plane (33) is a virtual tube detector plane.

3. The optical arrangement (1) according to claim 1 or 2, **characterised in that** the plurality of lenses (23) is designed as a micro lens array (25).

4. The optical arrangement (1) according to any of claims 1 to 3, **characterised in that** between the objective system (7) and the tube system (11) a beam splitter (21) is provided.

5. The optical arrangement (1) according to any of claims 1 to 4, **characterised in that** between the objective system (7) and the tube system (11) an orifice (67) is provided, which includes a centre (67a) displaced perpendicularly to the optical axis of the objective system (15a).

6. The optical arrangement (1) according to any of claims 1 to 5, **characterised in that** the optical axis of the tube system (15b) is arranged offset in parallel to the optical axis of the objective system (15a).

7. The optical arrangement (1) according to any of claims 1 to 3, **characterised in that** a reflective system (85) is arranged between the objective system (7) and the tube system (11).

8. The optical arrangement (1) according to claim 7, **characterised in that** at least one reflective element (86) of the reflective system (85) can be tilted about at least one tilting axis (45a).

9. The optical arrangement (1) according to claims 1 to 8, **characterised in that** lenses (75) arranged side by side of the plurality of optical lenses (23) include different focal lengths (31).

10. The optical arrangement (1) according to any of claims 1 to 9, **characterised in that** the focal lengths (31) of individual lenses (75) arranged side by side constantly increase or constantly decrease along a width direction (57) extending substantially perpendicular to the optical axis of the tube system (15b).

11. The optical arrangement (1) according to any of claims 1 to 10, **characterised in that** at least two individual lenses (75) of the plurality of optical lenses (23) are arranged at a different distance (76) from the object side (17).

12. The optical arrangement (1) according to claim 11, **characterised in that** the distance (76) of the individual lenses (75) is constantly changing from the object side (17) in the width direction (57).

13. The optical arrangement (1) according to claim 11 or 12, **characterised in that** the individual lenses (75) are each arranged at a distance (76) from the object side (17) which is specified in dependence of the focal length (31) of the respective lens (75), wherein the distance (76) of the respective individual lens (75) from the object side (17) is substantially directly proportional to the focal length (31) of the individual lens (75).

14. An inclined plane microscope (5) comprising an optical illumination arrangement (47) for illuminating a sample located in a detection volume (49) defined by the optical illumination arrangement (47), and an optical arrangement (1) for detecting scattered and/or fluorescent light (61) from the detection volume (47), **characterised in that** the optical arrangement (1) is an optical arrangement (1) according to any of claims 1 to 13.

## Revendications

1. Dispositif optique (1) de détection de lumière diffuse et/ou fluorescente (61) dans un microscope à illumination oblique (5), comprenant un système d'objectif (7) avec un axe optique (15a) permettant de capter et transmettre la lumière diffuse et/ou fluorescente (61) depuis un côté objet (17) vers un côté tube (19), un système de tube (11) situé du côté tube (19) du système d'objectif (7) et comprenant au moins une lentille de tube, avec un axe optique (15b) permettant de focaliser la lumière diffuse et/ou fluorescente (61), captée par le système d'objectif (7), dans un plan de détection de tube (33), dans lequel une pluralité de lentilles optiques (23) sont agencées entre le système de tube (11) et le plan virtuel de détection de tube (33), dans lequel la pluralité de lentilles (23), de manière essentiellement simultanée, transmettent la lumière diffuse et/ou fluorescente (61) et la focalisent dans un plan de détection (39) situé à distance du plan de détection de tube (33), et dans lequel chaque lentille (75) appartenant à la pluralité de lentilles (23) présente une ouverture numérique (NA) inférieure à celle du système de tube (11), **caractérisé en ce que** la pluralité de lentilles optiques (23) comprennent des lentilles (75) de différentes distances focales (31), de telle manière que la position de la plage de profondeur de champ de la lentille (75) respective au niveau du plan d'éclairage incliné du microscope à illumination oblique (5) peut être ajustée.

2. Dispositif optique (1) selon la revendication 1, **caractérisé en ce que** le plan de détection de tube (33) est un plan virtuel de détection de tube.

3. Dispositif optique (1) selon la revendication 1 ou 2, **caractérisé en ce que** la pluralité de lentilles (23) est conçue comme un réseau de microlentilles (25).

4. Dispositif optique (1) selon l'une quelconque des revendications 1 à 3, **caractérisé en ce qu'un** diviseur de faisceau (21) est fourni entre le système d'objectif (7) et le système de tube (11).

5. Dispositif optique (1) selon l'une quelconque des revendications 1 à 4, **caractérisé en ce qu'un** diaphragme (67) présentant un centre (67a) décalé perpendiculairement à l'axe optique du système d'objectif (15a) est fourni entre le système d'objectif (7) et le système de tube (11).

6. Dispositif optique (1) selon l'une quelconque des revendications 1 à 5, **caractérisé en ce que** l'axe optique du système de tube (15b) est agencé de manière décalée parallèlement à l'axe optique du système d'objectif (15a).

7. Dispositif optique (1) selon l'une quelconque des revendications 1 à 3, **caractérisé en ce qu'**un système réfléchissant (85) est agencé entre le système d'objectif (7) et le système de tube (11).

8. Dispositif optique (1) selon la revendication 7, **caractérisé en ce qu'au** moins un élément réfléchissant (86) du système réfléchissant (85) peut être basculé autour d'au moins un axe de basculement (45a).

9. Dispositif optique (1) selon les revendications 1 à 8, **caractérisé en ce que** des lentilles (75) juxtaposées appartenant à la pluralité de lentilles optiques (23) présentent différentes distances focales (31).

10. Dispositif optique (1) selon l'une quelconque des revendications 1 à 9, **caractérisé en ce que** les distances focales (31) de lentilles (75) individuelles juxtaposées augmentent ou diminuent de manière continue le long d'une direction de largeur (57) s'étendant de manière essentiellement perpendiculaire à l'axe optique du système de tube (15b).

11. Dispositif optique (1) selon l'une quelconque des revendications 1 à 10, **caractérisé en ce qu'**au moins deux lentilles (75) individuelles appartenant à la pluralité de lentilles optiques (23) sont agencées à une distance (76) différente par rapport au côté objet (17).

12. Dispositif optique (1) selon la revendication 11, **caractérisé en ce que** la distance (76) entre les lentilles (75) individuelles et le côté objet (17) varie de manière continue dans la direction de largeur (57).

13. Dispositif optique (1) selon la revendication 11 ou 12, **caractérisé en ce que** les lentilles (75) individuelles sont respectivement agencées à une distance (76) par rapport au côté objet (17) qui est déterminée en fonction de la distance focale (31) de la lentille (75) respective, dans lequel la distance (76) entre la lentille (75) individuelle respective et le côté objet (17) est essentiellement directement proportionnelle à la distance focale (31) de la lentille (75) individuelle.

14. Microscope à illumination oblique (5), comprenant un dispositif d'éclairage optique (47) permettant d'éclairer un échantillon se trouvant dans un volume de détection (49) défini par le dispositif d'éclairage optique (47), et un dispositif optique (1) permettant de détecter la lumière diffuse et/ou la lumière fluorescente (61) en provenance du volume de détection (47), **caractérisé en ce que** le dispositif optique (1) est un dispositif optique (1) selon l'une quelconque des revendications 1 à 13.
